# EUROPEAN PATENT SPECIFICATION

(11) **EP 3 362 659 B1**
(45) Date of publication and mention of the grant of the patent: **15.07.2020**
(21) Application number: 16787660.6
(22) Date of filing: 11.10.2016
(51) Int. Cl.: F02B 37/18, F02D 9/10, F16K 1/20, F02M 26/70

(54) **BYPASS VALVE FOR TURBOCHARGER**
BYPASSVENTIL FÜR TURBOLADER
SOUPAPE DE DÉRIVATION POUR TURBOCOMPRESSEUR

(30) Priority: 16.10.2015 DE 102015220225
(43) Date of publication of application: 22.08.2018
(73) Proprietor: BorgWarner Inc., Auburn Hills, MI 48326 (US)
(72) Inventor: ROTT, Werner, 55237 Flonheim (DE); SCHOLZ, Georg, 55597 Wöllstein (DE)
(74) Representative: Peterreins Schley
(86) International application number: PCT/US2016/056383
(87) International publication number: WO 2017/066167

(56) References cited:
- EP-A1- 2 803 838
- EP-A1- 2 913 497
- EP-A2- 2 508 730
- WO-A1-2011/048540
- DE-A1-102011 077 626
- DE-A1-102011 089 777
- DE-A1-102013 214 665
- GB-A- 1 377 721
- US-A- 298 865
- US-A- 3 395 727

## Description

### Field of the Invention

The present invention relates to a bypass valve for engines with multiple charging and also a suction tract and an exhaust gas tract with a corresponding bypass valve.

### Background Information

Increasingly more vehicles of the more recent generation are equipped with turbochargers. They have become an important component in future emissions guidelines. In order to achieve the target demands and the cited legal requirements, it is imperative to promote development in the entire drive train and also to optimize the individual components as well as the system as a whole.

Multi-stage, most often two-stage supercharging systems are used as part of the system components for the engine and turbocharger. For example, a two-stage controlled supercharging system comprises two turbochargers (a large, low-pressure exhaust gas turbocharger and a smaller, high-pressure exhaust gas turbocharger). At lower speeds, the high-pressure turbocharger guarantees a fast boost pressure and thus a dynamic start, whereas the large, low-pressure turbocharger is used at higher speeds and is responsible for the high end output at a low-pressure stage. Bypasses with corresponding bypass valves thereby ensure an alignment of the supercharging to the engine operation points on the compressor and on the turbine sides.

Known valve systems are throttle or flap valves which have a circumferential seal; the valve rotates around the main axis of the seal and that axis crosses the sealed area. Such a valve is disclosed, e.g., in EP 2 913 497 A1. Linearly functioning check valves represent an alternative valve variant which is pretensioned using a spring. These types of valves require a relatively large installation space.

In order to improve the complete system architecture of the drive train, it is imperative to also optimize the bypass valves for bypasses on the compressor and on the turbine sides. Factors which play a role are, among others, the size (installation space requirement) of the valve, the response characteristic and its determinability, arrangement or installation position, and flow behavior through the valve.

The goal of the present invention is accordingly to provide an optimized bypass valve, which alleviates the disadvantages of the known valves and provides advantages in the area of the factors mentioned above.

### Brief Summary of the Invention

The present invention relates to a bypass valve according to Claim 1 and a drive unit according to Claim 14.

The bypass valve according to the invention is designed for use in a pipe section of a bypass for an engine with turbocharging. The bypass valve has one sealing device which comprises a flap. The flap is mounted to be doubly rotatable via a first axis of rotation and via a second axis of rotation. The bypass valve additionally comprises a pipe section of a bypass, wherein the flap is arranged in the pipe section. Both, the first and also the second axes of rotation extend offset with respect to the center axis of the pipe section, wherein the center axis of the pipe section extends between the first and second axes of rotation. Due to the fact that the flap is doubly rotatably mounted about two axes of rotation, a specific kinematics may be realized for the opening action of the flap. This enables an opening action without blocking or jamming the flap. In addition, the specific arrangement has a small installation requirement and thus enables an arrangement of the complete sealing device in a bypass pipe section.

The second axis of rotation may be arranged closer to the flap than the first axis of rotation, at least in the closed state of bypass valve.

In embodiments, at least one projection, in particular two projections may be provided on one surface of the flap, wherein the second axis of rotation extends through the at least one projection. In addition, the sealing device has a pivot pin and a sleeve, wherein the sleeve is rotatably mounted on the pivot pin and the first axis of rotation is defined thereby. In particular, the pivot pin may be arranged at a distance from the first surface. At least one lever arm, preferably two lever arms, may be arranged on the sleeve, wherein the lever arm(s) may be rotatably coupled in a distal region to the projection(s) of the flap, when viewed from the pivot pin, and thus defines the second axis of rotation. At least one spring, which counteracts a rotation of the flap about the first axis of rotation, may be arranged about the pivot pin. The at least one spring may comprise one or two leg springs, wherein each leg of the leg springs may be respectively guided in a receptacle which is arranged on the first surface of the flap. The legs of the leg springs are thereby guided in the receptacles in such a way that they are displaceable in the receptacles during opening of the flap.

In embodiments, which may be combined with all of the previously described embodiments, a stop may be arranged on the first surface of the flap, wherein the stop limits an initial inclination movement of the flap during opening, in particular wherein the stop strikes the lever arm(s) during opening and thus a predetermined maximum inclination angle of the flap is defined for the initial inclination movement at the beginning of the opening action. After the stop has struck the lever arm(s), further opening of the flap may be carried out by rotating the lever arm(s) about the first axis of rotation.

In embodiments, which may be combined with all of the previously described embodiments, the first axis of rotation and the second axis of rotation may extend perpendicular to a center axis of the pipe section. The first axis of rotation and the second axis of rotation may extend, in the closed state of the bypass, in such a way that an imaginary connecting line, which connects the first axis of rotation and the second axis of rotation and intersects the center axis of the pipe section, does not intersect the center axis at a 90° angle. The second axis of rotation may change its position in the pipe section during the movement of the flap. The first axis of rotation may be arranged in such a way in the pipe section that it does not change the position thereof in the pipe section during movement of the flap. The pivot pin of the first axis of rotation may be arranged in two receptacles, wherein the two receptacles are fixed in the wall of the pipe section or are formed integrally with the same. The pipe section may have a first inner diameter and a second inner diameter, wherein the first inner diameter is larger than the second inner diameter. The sealing device may be arranged at least partially in the region of the first inner diameter. A transition region of the pipe section from the first inner diameter to the second inner diameter may be configured conically and define a conical seat. In embodiments, the pipe section may be composed from a first component, a second component, and a third component. The first component is arranged between the second component and the third component. A configuration of this type is advantageous for the assembly. The first and the second axes of rotation may be arranged in the region of the first component. In addition, the receptacles for the pin may be positioned in the region of the first component. The first component may have an inner diameter of D1, the second component and the third components may have an inner diameter D2 and D3, which are smaller than D1 . In each case, one end of the second component and of the third component, which contact first the component 202, may have a transition region in which the respective inner diameter of D2 or D3 is increased to D1. D2 and D3 may be equally large. The transition region of the second component is configured conically and may define a conical seat. The flap may contact on the conical seat in the closed state of the bypass valve and thus prevent a fluid flow through the pipe section. The flap may have a circular shape, wherein a sealing ring may be arranged circumferentially around the circumference of the flap, and wherein the sealing ring may contact on the conical seat in the closed state.

In embodiments, which may be combined with all of the previously described embodiments, the flap may initially be inclined at a predetermined angle during the opening of the bypass valve, in particular at a contact point between the flap or the sealing ring and the pipe section, in order to be able to subsequently rotate freely about the first axis of rotation.

In embodiments, which may be combined with all of the previously described embodiments, the bypass valve may be self-regulating, preferably pressure-regulated, in particular via the air pressure of the air flow contacting the flap. The flap of the bypass valve accordingly opens until an equilibrium state exists between the force generated by the air pressure of the airflow at the flap (air pulse) and the force of the spring(s).

Advantages of the bypass valve according to the invention are, in particular, a smaller installation space or spatial requirement for the installation, since the axis of rotation or axes of rotation of the flap are arranged in the pipe section. In addition, the forces which must be applied for opening the flap may be variably determined due to the targeted arrangement of the axes of rotation, and the selection of the leg springs.

Furthermore, the bypass valve has advantageous throughflow characteristics (linear flow). In particular, the sealing device of the bypass valve scarcely blocks the throughflow through the pipe section in the completely open position.

The invention additionally comprises a suction tract for an engine comprising a bypass valve according to any of the previously described embodiments. This type of suction tract may comprise a two-stage supercharging system, in particular wherein the two-stage supercharging system comprises a low-pressure exhaust gas turbocharger and a high-pressure turbocharger. The bypass valve may be arranged in a compressor bypass of the two-stage supercharging system in such a way that air is guided through the compressor bypass and around a compressor wheel of the high-pressure exhaust gas turbocharger when the bypass valve is open.

The invention additionally comprises an exhaust gas tract for an engine comprising a bypass valve according to any of the previously described embodiments. This type of exhaust gas tract may comprise a two-stage supercharging system, in particular wherein the two-stage supercharging system comprises a low-pressure exhaust gas turbocharger and a high-pressure turbocharger. The bypass valve may be arranged in a turbine bypass of the two-stage supercharging system in such a way that air is guided through the turbine bypass and around a turbine wheel of the high-pressure exhaust gas turbocharger when the bypass valve is open.

The invention additionally comprises a drive unit for a motor vehicle comprising a previously described suction tract and/or a previously described exhaust gas tract.

### Brief Description of the Drawings

- Figure 1: shows a top view of the bypass valve according to the invention according to one embodiment;
- Figure 2A: shows a partial view of the bypass valve according to the invention according to the embodiment from Figure 1 in the closed state;
- Figures 2B through 2D: show partial views of the bypass valve according to the invention according to the embodiment from Figure 1 in different states during the opening action.

### Detailed Description of the Invention

In the following, an embodiment of the bypass valve according to the invention will be described by means of the figures.

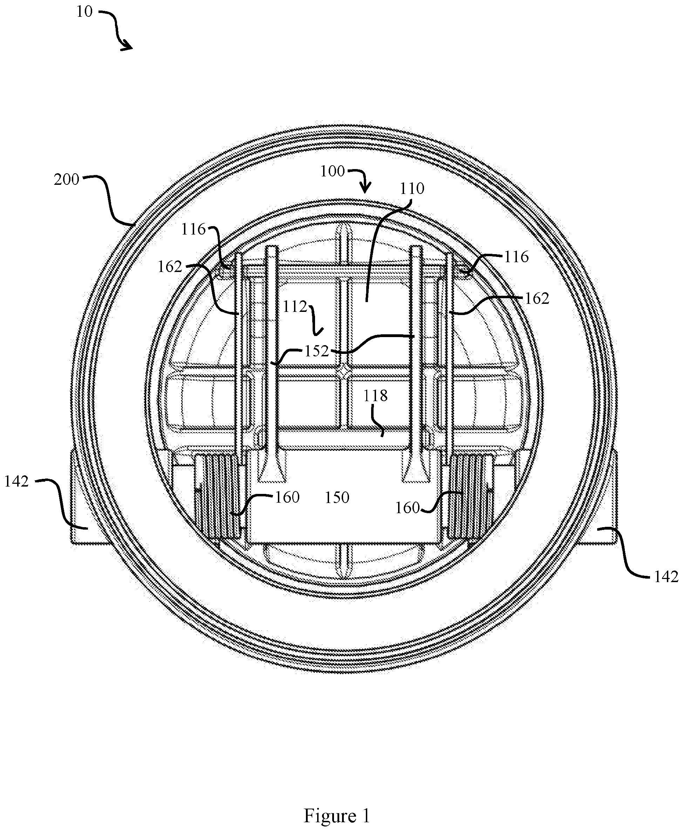

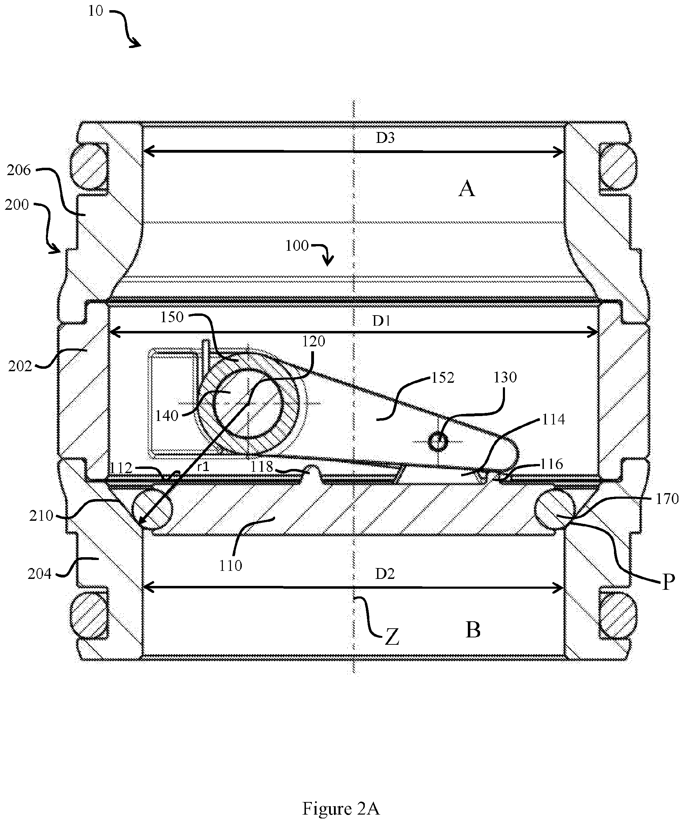

Figure 1 shows an embodiment according to the invention of bypass valve 10 for an engine with turbocharging in a top view. Bypass valve 10 is designed for use in a pipe section 200 of a bypass, e.g. in order to bypass a compressor wheel of a turbocharger or to bypass a turbine wheel of a turbocharger. Bypass valve 10 has a sealing device 100 which comprises a flap 110. As is especially clear in Figures 2A through 2D, flap 110 is mounted to be doubly rotatable via a first axis of rotation 120 and via a second axis of rotation 130. This enables a specific kinematics for implementing the opening action of flap 110, which enables an opening action without blocking or jamming flap 110 in pipe section 200 (see detailed description of the opening action further below). In addition, the specific arrangement has a small installation requirement and thus enables an arrangement of complete sealing device 100 in a bypass pipe section 200.

As is clear from Figure 2A, in the closed state of bypass valve 10, second axis of rotation 130 is arranged closer to flap 110 than first axis of rotation 120. Two projections 114 are provided on a first surface 112 of flap 110 (in Figures 2A through 2D, only one is evident, since second projection 114 is hidden by first projection 114). Second axis of rotation 130 extends through both projections 114. In addition, sealing device 100 has a pivot pin 140 and a sleeve 150, wherein sleeve 150 is rotatably mounted on pivot pin 140 and first axis of rotation 120 is defined thereby. In the cutaway drawings of Figures 2A through 2D, it is clear that pivot pin 140 is arranged at a distance from first surface 112. Projections 114 and pivot pin 140 of first axis of rotation 120 are located on the same side of flap 110, specifically on the side of first surface 112. Two lever arms 152 are arranged on sleeve 150. Lever arms 152 are rotatably coupled to projections 114 of flap 110 in a distal region when viewed from pivot pin 140. Second axis of rotation 130 is defined thereby. The coupling is arranged, for example, in the distal half of lever arms 152, in particular in the distal third of lever arm 152. The rotatable coupling between lever arms 152 and projections 114 may be realized, for example, via a hole-pin connection. Alternatively, the rotatable coupling may be carried out via axle projections, integrally provided on lever arms 152 (or projections 114), which engage in corresponding holes in projections 114 (or lever arms 152).

As is especially clear in Figure 1, two leg springs 160 are arranged around pivot pin 140, which counteract a rotation of flap 110 about first axis of rotation 120. One leg 162 respectively of the leg springs is respectively guided in a receptacle 116 which is arranged on first surface 112 of flap 110. Legs 162 of leg springs 160 are thereby guided in receptacles 116 in such a way that they are displaceable in receptacles 116 during opening of flap 110. This means that legs 162 move during opening and sealing of flap 110 in the direction of the longitudinal axis of legs 162 in receptacles 116. Second, shorter legs of leg springs 160 (for example, clearly depicted in Figure 2A parallel to the center axis Z at the left upper corner of sleeve 150) respectively prevent a co-rotation of leg springs 160 around pin 140 during opening of flap 110. Thus, a force is generated, via the spring force of leg springs 160, which counteracts the rotation of flap 110 about first axis of rotation 120.

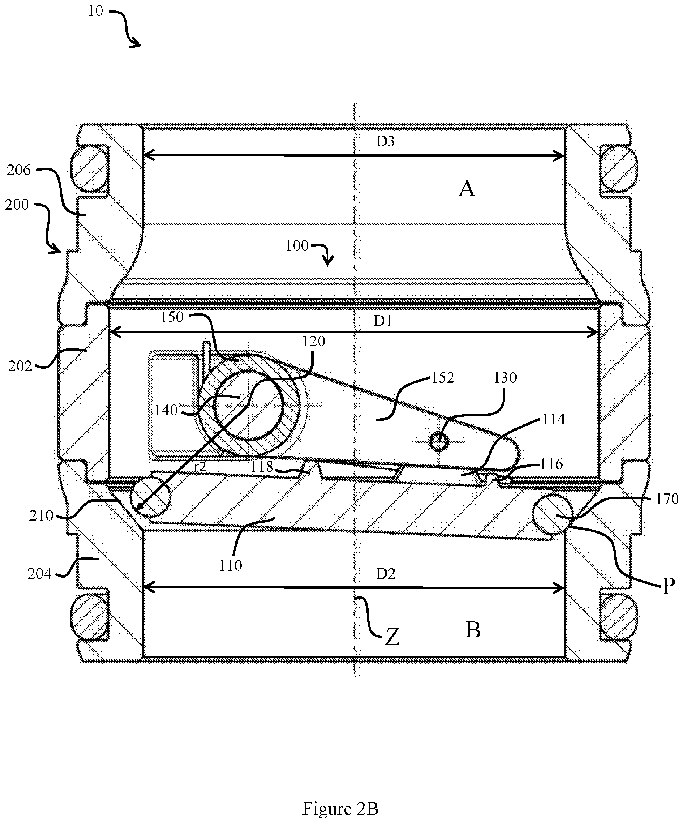

A stop 118 is arranged on first surface 112 of flap 110. Stop 118 limits an initial inclination movement of flap 110 upon opening in that it strikes lever arm 152 (see Figure 2B). By this means, a predetermined maximum inclination angle of flap 110 is defined for the initial inclination movement at the beginning of the opening action. After stop 118 has struck lever arm 152, further opening of flap 110 is carried out by rotating lever arm 152 about first axis of rotation 120 (additional details regarding the opening kinematics are further below).

Sealing device 100 of bypass valve 10 is arranged in a pipe section 200 of a bypass. First axis of rotation 120 and second axis of rotation 130 extend perpendicular to a center axis Z of pipe section 200 (see e.g. Figure 2A). In addition, both axes of rotation 120, 130 extend parallel to one another and both first axis of rotation 120 and also second axis of rotation 130 are arranged offset with respect to center axis Z of pipe section 200, wherein center axis Z of pipe section 200 extends between first and second axes of rotation 120, 130. This means that the two axes of rotation do not intersect with one another and also do not intersect with center axis Z. First axis of rotation 120 and second axis of rotation 130 extend, in the closed state of bypass valve 10, in such a way that an imaginary connecting line, which connects first axis of rotation 120 and second axis of rotation 130 and intersects center axis Z of pipe section 200, does not intersect center axis Z at a 90° angle.

During movement of flap 110 (for opening or closing), second axis of rotation 130 changes the position thereof in pipe section 200 (see corresponding position of second axis of rotation 130 in Figures 2A through 2D). In contrast, first axis of rotation 120 is arranged in such a way in pipe section 130 that it does not change the position thereof in pipe section 200 during movement of flap 110. Pivot pin 140 of first axis of rotation 120 is arranged for this purpose in two receptacles 142. The pivot pin may, for example, be fixed in two receptacles 142 via a press fit. Two receptacles 142 may be fixed in the wall of pipe section 200 or integrally formed in the same.

Pipe section 200 has a first inner diameter D1 and a second inner diameter D2. In the embodiment shown in Figures 2A bis 2D, pipe section 200 is composed from a first component 202, a second component 204, and a third component 206. In alternative embodiments, pipe section 200 may also be formed as one piece. In the embodiment shown, first component 202 is arranged between second component 204 and third component 206. A configuration of this type is advantageous for the assembly. First and second axes of rotation 120, 130 are arranged in the region of first component 202 in the closed state. In addition, receptacles 142 for pivot pin 140 are positioned in the region of first component 202. First component 202 has an inner diameter D1. Second component 204 and third component 206 have an inner diameter D2 and D3, which are smaller than D1. In each case, one end of second component 204 and of third component 206, which contacts first component 202, has a transition region in which the respective inner diameter of D2 or D3 is increased to D1. D2 and D3 may be equally large. The transition region of second component 204 is configured conically and defines a conical seat 210. As is apparent in Fig. 1, flap 110 of the embodiment shown is circular, wherein a sealing ring 170 is arranged circumferentially around the circumference of flap 110 (see Figures 2A through 2D). Sealing ring 170 contacts conical seat 210 in the closed state of flap 110 (see Figure 2A). By this means, fluid flow through pipe section 200 is prevented. The material for sealing ring 170 may be selected depending on the application for which the bypass valve is provided (compressor bypass, turbine bypass). For applications in which the temperatures do not become too high, O-rings, for example, made from an elastomer, may be used. For high temperature applications in turbine bypasses, which are subjected to exhaust gasses of 900 degrees and higher, temperature-resistant metal sealing rings 170, for example, may be used.

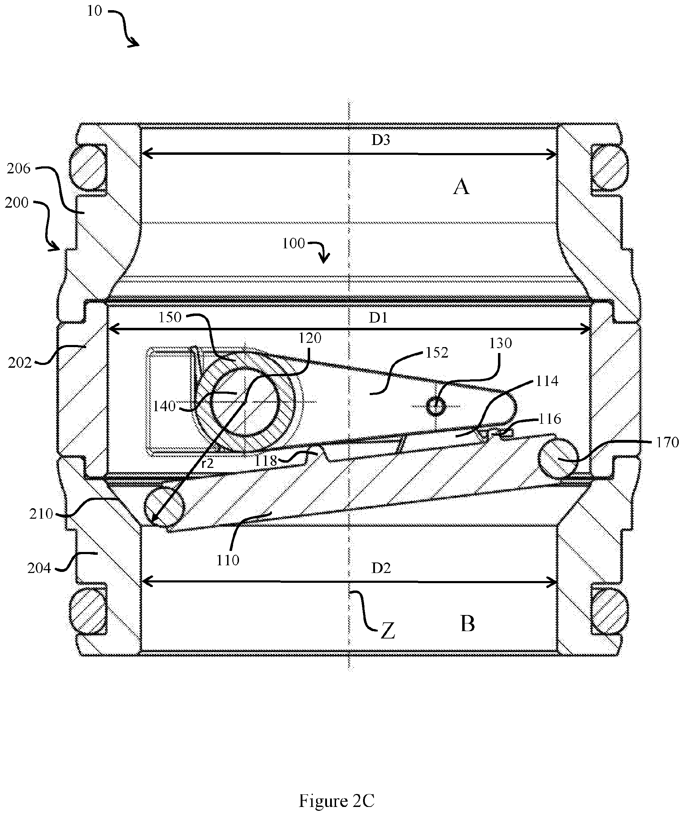

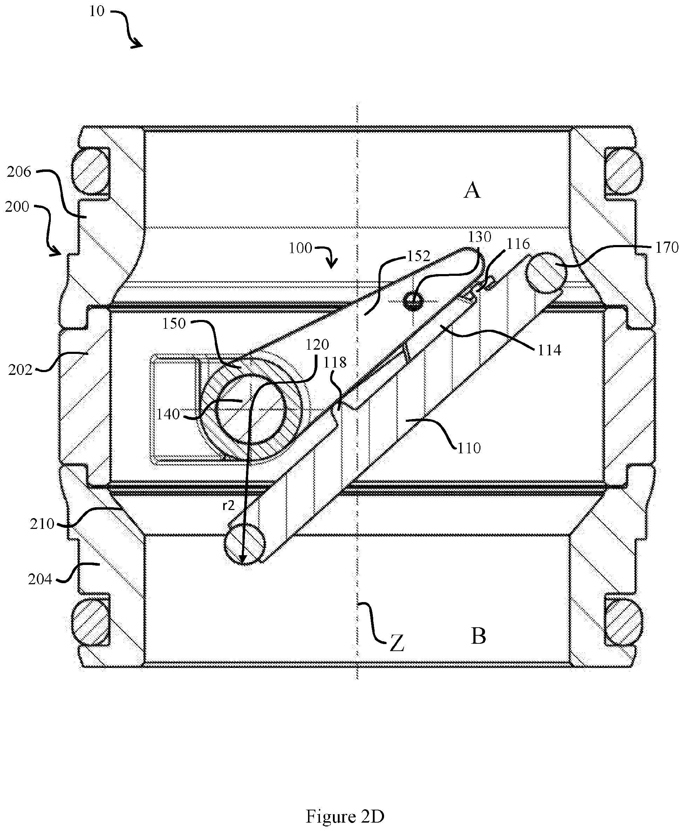

The kinematics of sealing device 100 or of flap 110 during opening of bypass valve 10 will be subsequently described in greater detail by means of Figures 2A through 2D. As is apparent in Fig. 2A, sealing ring 170, as described above, for example, a sealing ring 170 made from elastomer for use in a compressor bypass or a sealing ring 170 made from a heat-resistant material (e.g. a metal) for use in a turbine bypass, is arranged centered in conical seat 210 in the closed state and thus prevents an air flow through bypass valve 10. This means, in the closed position of bypass valve 10 or of flap 110, the pressure in pipe section 200 in the region downstream of flap 110 (region A) is always greater than the pressure in the region of pipe section 200 upstream of flap 110 (region B). A pressure difference is present in the contact region of flap 110 or of sealing ring 170 of flap 110 with conical seat 210 of pipe section 200. In addition, leg springs 160 arranged around pivot pin 140, which defines first axis of rotation 120, exert a contact force at the contact point of the leg springs in corresponding receptacle 116, which force counters a rotational movement of sleeve 150 or of lever arms 152 about first axis of rotation 120. Flap 110 itself is rotatably mounted on lever arms 152 via corresponding projections 114 on first surface 112 of flap 110 and defines second axis of rotation 130 via this mounting. During an attempt to rotate lever arms 152 with flap 110 about first axis of rotation 120 in order to open bypass valve 10, an arrangement without second axis of rotation 130 would jam with conical seat 210, since radius r1 (see Figure 2A) is too large for the rotational movement about first axis of rotation 120 to permit a clear rotation of flap 110 out of the closed position. Second axis of rotation 130 in the coupling region between lever arm 152 and flap 110 and the specific design of sealing device 100 solve this problem through the following advantages: Flap 110 is loaded with a spring force at the contact points of leg springs 160 in receptacles 116. Legs 162 of leg springs 160 may, however, longitudinally displace in the respective receptacle 116. In the case where the pressure in region B upstream of flap 110 exceeds the pressure in region A downstream of flap 110, flap 110 initially inclines about contact point P until stop 118 of flap 110 strikes lever arm 152 (see Figure 2B). The initial inclination movement of flap 110 about contact point P is thus ended. During this inclination movement, both a rotation about first axis of rotation 120 and also a rotation about second axis of rotation 130 additionally occur. In addition, second axis of rotation 130 displaces itself within pipe section 200. Subsequently, flap 110 moves synchronously with lever arm 152 about first axis of rotation 120 against the spring force for additional opening (see Figure 2B). This is enabled by the particular kinematics of sealing device 100. Due to the initial inclination movement of flap 110 about contact point P, the spacing of flap 110 to first axis of rotation 120 changes in certain regions of flap 110. This results in radius r2 (see Figure 2B) for the rotational movement about first axis of rotation 120, wherein radius r2 is smaller than radius r1. Smaller radius r2 now enables flap 110 to pivot through the sealing region without any contact with the pipe section wall or conical seat 210 (see Figure 2C), by which means bypass valve 10 is further opened. Figure 2D shows the bypass valve in an open position. Bypass valve 10 thereby always opens until an equilibrium state exists between the force generated by the air pressure of the airflow at flap 110 (air pulse) and the force of springs 160.

Advantages of this design are, in particular, a smaller installation space or spatial requirement for the installation, since axis of rotation or axes of rotation 120, 130 of flap 110 are arranged in pipe section 200. In addition, the forces which must be applied for opening flap 110 may be variably determined due to the targeted arrangement of axes of rotation 120, 130 and the selection of the characteristics of leg springs 160.

Furthermore, bypass valve 10 has advantageous throughflow characteristics (linear flow). In particular, sealing device 100 of bypass valve 10 scarcely blocks the throughflow through pipe section 200 in the completely open position.

Figures 1 through 2D show an embodiment of bypass valve 10 which is self regulating. These types of embodiments are preferably pressure regulated, in particular via the air pressure of the airflow applied at flap 110. Flap 110 of bypass valve 10 accordingly opens until an equilibrium state exists between the force generated by the air pressure of the airflow at flap 110 (air pulse) and the force of springs 160.

The invention additionally comprises a suction tract for an engine which comprises a bypass valve 10 as described herein. This type of suction tract may comprise a two-stage supercharging system, in particular wherein the two-stage supercharging system comprises a low-pressure exhaust gas turbocharger and a high-pressure turbocharger. Bypass valve 10 may be arranged in a compressor bypass of the two-stage supercharging system in such a way that air is guided through the compressor bypass and around a compressor wheel of the high-pressure exhaust gas turbocharger when bypass valve 10 is open.

In addition, the invention comprises an exhaust gas tract for an engine which comprises a bypass valve 10 as described herein. This type of exhaust gas tract may comprise a two-stage supercharging system, in particular wherein the two-stage supercharging system comprises a low-pressure exhaust gas turbocharger and a high-pressure turbocharger. Bypass valve 10 may be arranged in a turbine bypass of the two-stage supercharging system in such a way that air is guided through the turbine bypass and around a turbine wheel of the high-pressure exhaust gas turbocharger when bypass valve 10 is open.

The invention additionally comprises a drive unit for a motor vehicle comprising a previously described suction tract and/or a previously described exhaust gas tract.

## Claims

1. A bypass valve (10) for an engine with turbocharging for use in a pipe section (200) of a bypass comprising
a sealing device (100) which has a flap (110), and
a pipe section (200) of a bypass,
**characterized**
**in that** the flap (110) is mounted to be doubly rotatable via a first axis of rotation (120) and via a second axis of rotation (130);
**in that** the flap (110) is arranged in the pipe section (200), and wherein both the first and also the second axes of rotation (120, 130) extend offset with respect to the center axis (Z) of the pipe section (200), wherein the center axis (Z) of the pipe section (200) extends between the first and second axes of rotation (120, 130); and
**in that** the second axis of rotation is realized by a hole-pin connection.

2. The bypass valve according to Claim 1, **characterized in that** at least one projection (114), in particular two projections (114) is provided on a first surface (112) of the flap (110), wherein the second axis of rotation (130) extends through the at least one projection (114).

3. The bypass valve according to Claim 2, **characterized in that** the sealing device (100) has a pivot pin (140) and a sleeve (150), wherein the sleeve (150) is rotatably mounted on the pivot pin (140) and the first axis of rotation (120) is defined thereby, in particular wherein the pivot pin (140) is arranged at a distance from the first surface (112).

4. The bypass valve according to Claim 3, **characterized in that** at least one lever arm (152), preferably two lever arms (152), is arranged on the sleeve (150), wherein the lever arm(s) (152) are rotatably coupled in a distal region with the projection(s) (114) of the flap (110), when viewed from the pivot pin (140), and thus define the second axis of rotation (130).

5. The bypass valve according to any one of Claims 3 through 4, **characterized in that** at least one spring (160), which counteracts a rotation of the flap (110) about the first axis of rotation (120), is arranged around the pivot pin (160).

6. The bypass valve according to Claim 5, **characterized in that** the at least one spring (160) comprises one or two leg springs (160), wherein each leg (162) of the leg springs is respectively guided into a receptacle (116) which is arranged on the first surface (112) of the flap (110), in particular wherein the legs (162) of the leg springs (160) are thereby guided in the receptacles (116) in such a way that they are displaceable in the receptacles (116) during opening of the flap (110).

7. The bypass valve according to any one of Claims 2 through 6, **characterized in that** a stop (118) is arranged on the first surface (112) of the flap (110), wherein the stop (118) limits an initial inclination movement of the flap (110) during opening, in particular wherein the stop (118) strikes the lever arm(s) (152) during opening and thus a predetermined maximum inclination angle of the flap (110) is defined for the initial inclination movement at the beginning of the opening action.

8. The bypass valve according to Claim 7, **characterized in that** after the stop (118) has struck the lever arm(s) (152), further opening of the flap (110) is carried out by rotating the lever arm(s) (152) about the first axis of rotation (120).

9. The bypass valve according to any one of the preceding Claims, **characterized in that** the second axis of rotation (130) changes its position in the pipe section (200) during the movement of the flap (110); in particular wherein the first axis of rotation (120) is arranged in such a way in the pipe section (200]) that it does not change the position thereof in the pipe section (200) during movement of the flap (110).

10. The bypass valve according to any one of the preceding Claims, **characterized in that** the pivot pin (140) of the first axis of rotation (120) is arranged in two receptacles (142), wherein the two receptacles (142) are fixed in the wall of the pipe section (200) or are formed integrally with the same.

11. The bypass valve according to any one of the preceding Claims **characterized in that** the pipe section (200) has a first inner diameter (D1) and a second inner diameter (D2), wherein the first inner diameter (D1) is larger than the second inner diameter (D2); and wherein the sealing device (100) is arranged at least partially in the region of the first inner diameter (D1).

12. The bypass valve according to Claim 11, **characterized in that** a transition region of the pipe section from the first inner diameter (D1) to the second inner diameter (D2) is configured conically and defines a conical seat (210); in particular wherein the flap (110) has a circular shape, wherein a sealing ring (170) is arranged circumferentially around the circumference of the flap (110), and wherein the sealing ring (170) contacts on the conical seat (210) in the closed state.

13. The bypass valve according to any one of the preceding Claims, **characterized in that** the flap (110) initially inclines at a predetermined angle during opening of the bypass valve (10), in particular at a contact point (P) between the flap (110) or the sealing ring (170) and the pipe section (200), in order to be able to subsequently rotate freely about the first axis of rotation (120).

14. A drive unit for a motor vehicle with a suction tract for an engine comprising a bypass valve (10) according to any one of Claims 1 through 13 and/or with an exhaust gas tract for an engine comprising a bypass valve (10) according to any one of Claims 1 through 13.

## Patentansprüche

1. Bypassventil (10) für einen Motor mit Turboaufladung zur Verwendung in einem Rohrabschnitt (200) eines Bypasses, umfassend
eine Dichtungsvorrichtung (100), die eine Klappe (110) aufweist, und
einen Rohrabschnitt (200) eines Bypasses,
**dadurch gekennzeichnet,**
**dass** die Klappe (110) so montiert ist, dass sie über eine erste Drehachse (120) und über eine zweite Drehachse (130) doppelt drehbar ist;
**dass** die Klappe (110) im Rohrabschnitt (200) angeordnet ist, und wobei sowohl die erste als auch die zweite Drehachse (120, 130) in Bezug auf die Mittelachse (Z) des Rohrabschnitts (200) versetzt verlaufen, wobei die Mittelachse (Z) des Rohrabschnitts (200) zwischen der ersten und der zweiten Drehachse (120, 130) verläuft; und
**dass** die zweite Drehachse durch eine Loch-Zapfen-Verbindung ausgeführt ist.

2. Bypassventil gemäß Anspruch 1, **dadurch gekennzeichnet, dass** an einer ersten Oberfläche (112) der Klappe (110) zumindest ein Vorsprung (114), insbesondere zwei Vorsprünge (114), bereitgestellt ist, wobei die zweite Drehachse (130) durch den zumindest einen Vorsprung (114) verläuft.

3. Bypassventil gemäß Anspruch 2, **dadurch gekennzeichnet, dass** die Dichtungsvorrichtung (100) einen Drehzapfen (140) und eine Hülse (150) aufweist, wobei die Hülse (150) drehbar am Drehzapfen (140) montiert ist und dadurch die erste Drehachse (120) definiert ist, insbesondere wobei der Drehzapfen (140) in einem Abstand zur ersten Oberfläche (112) angeordnet ist.

4. Bypassventil gemäß Anspruch 3, **dadurch gekennzeichnet, dass** an der Hülse (150) zumindest ein Hebelarm (152), vorzugsweise zwei Hebelarme (152), angeordnet ist, wobei der (die) Hebelarm(e) (152), vom Drehzapfen (140) aus gesehen, in einem distalen Bereich mit dem (den) Vorsprung (Vorsprüngen) (114) der Klappe (110) drehbar gekoppelt ist (sind) und somit die zweite Drehachse (130) definiert (definieren).

5. Bypassventil gemäß irgendeinem der Ansprüche 3 bis 4, **dadurch gekennzeichnet, dass** um den Drehzapfen (160) zumindest eine Feder (160) angeordnet ist, die einer Drehung der Klappe (110) um die erste Drehachse (120) entgegenwirkt.

6. Bypassventil gemäß Anspruch 5, **dadurch gekennzeichnet, dass** die zumindest eine Feder (160) eine oder zwei Schenkelfedern (160) umfasst, wobei jeder Schenkel (162) der Schenkelfedern jeweils in eine Aufnahme (116) geführt ist, die an der ersten Oberfläche (112) der Klappe (110) angeordnet ist, wobei insbesondere die Schenkel (162) der Schenkelfedern (160) dadurch so in den Aufnahmen (116) geführt sind, dass sie während des Öffnens der Klappe (110) in den Aufnahmen (116) verschiebbar sind.

7. Bypassventil gemäß irgendeinem der Ansprüche 2 bis 6, **dadurch gekennzeichnet, dass** an der ersten Oberfläche (112) der Klappe (110) ein Anschlag (118) angeordnet ist, wobei der Anschlag (118) eine anfängliche Neigungsbewegung der Klappe (110) während des Öffnens begrenzt, insbesondere wobei der Anschlag (118) während des Öffnens auf den (die) Hebelarm(e) (152) auftrifft und somit ein vorbestimmter maximaler Neigungswinkel der Klappe (110) für die anfängliche Neigungsbewegung zu Beginn des Öffnungsvorgangs definiert ist.

8. Bypassventil gemäß Anspruch 7, **dadurch gekennzeichnet, dass** nach dem Auftreffen des Anschlags (118) auf den (die) Hebelarm(e) (152) ein weiteres Öffnen der Klappe (110) durch Drehen des (der) Hebelarms (Hebelarme) (152) um die erste Drehachse (120) erfolgt.

9. Bypassventil gemäß irgendeinem der vorangehenden Ansprüche, **dadurch gekennzeichnet, dass** die zweite Drehachse (130) während der Bewegung der Klappe (110) ihre Position im Rohrabschnitt (200) ändert; insbesondere wobei die erste Drehachse (120) derart im Rohrabschnitt (200) angeordnet ist, dass sie deren Position im Rohrabschnitt (200) während der Bewegung der Klappe (110) nicht ändert.

10. Bypassventil gemäß irgendeinem der vorangehenden Ansprüche, **dadurch gekennzeichnet, dass** der Drehzapfen (140) der ersten Drehachse (120) in zwei Aufnahmen (142) angeordnet ist, wobei die beiden Aufnahmen (142) in der Wand des Rohrabschnitts (200) befestigt oder integral mit diesem ausgebildet sind.

11. Bypassventil gemäß irgendeinem der vorangehenden Ansprüche, **dadurch gekennzeichnet, dass** der Rohrabschnitt (200) einen ersten Innendurchmesser (D1) und einen zweiten Innendurchmesser (D2) aufweist, wobei der erste Innendurchmesser (D1) größer als der zweite Innendurchmesser (D2) ist und wobei die Dichtungsvorrichtung (100) zumindest teilweise im Bereich des ersten Innendurchmessers (D1) angeordnet ist.

12. Bypassventil gemäß Anspruch 11, **dadurch gekennzeichnet, dass** ein Übergangsbereich des Rohrabschnitts vom ersten Innendurchmesser (D1) zum zweiten Innendurchmesser (D2) konisch gestaltet ist und einen konischen Sitz (210) definiert; insbesondere wobei die Klappe (110) kreisförmig ist, wobei um den Umfang der Klappe (110) umlaufend ein Dichtungsring (170) angeordnet ist und wobei der Dichtungsring (170) im geschlossenen Zustand mit dem konischen Sitz (210) in Kontakt steht.

13. Bypassventil gemäß irgendeinem der vorangehenden Ansprüche, **dadurch gekennzeichnet, dass** die Klappe (110) während des Öffnens des Bypassventils (10) anfänglich in einem vorbestimmten Winkel geneigt ist, insbesondere an einem Kontaktpunkt (P) zwischen der Klappe (110) oder dem Dichtungsring (170) und dem Rohrabschnitt (200), um sich anschließend frei um die erste Drehachse (120) drehen zu können.

14. Antriebseinheit für ein Kraftfahrzeug mit einem Ansaugtrakt für einen Motor, umfassend ein Bypassventil (10) gemäß irgendeinem der Ansprüche 1 bis 13, und/oder mit einem Abgastrakt für einen Motor, umfassend ein Bypassventil (10) nach irgendeinem der Ansprüche 1 bis 13.

## Revendications

1. Soupape de dérivation (10) pour un moteur à suralimentation destinée à être utilisée dans une section de conduite (200) d'une dérivation comprenant
un dispositif d'étanchéité (100) qui comporte un clapet (110), et
une section de conduite (200) d'une dérivation,
**caractérisée**
**en ce que** le clapet (110) est monté de manière à être doublement rotatif par le biais d'un premier axe de rotation (120) et par le biais d'un deuxième axe de rotation (130) ; en ce que le clapet (110) est agencé dans la section de conduite (200), et à la fois le premier et le deuxième axe de rotation (120, 130) s'étendant de manière décalée par rapport à l'axe central (Z) de la section de conduite (200), l'axe central (Z) de la section de conduite (200) s'étendant entre les premier et deuxième axes de rotation (120, 130) ; et
**en ce que** le deuxième axe de rotation est réalisé par une liaison trou/axe.

2. Soupape de dérivation selon la revendication 1, **caractérisée en ce qu'**au moins une saillie (114), en particulier deux saillies (114) sont prévues sur une première surface (112) du clapet (110), le deuxième axe de rotation (130) s'étendant à travers l'au moins une saillie (114).

3. Soupape de dérivation selon la revendication 2, **caractérisée en ce que** le dispositif d'étanchéité (100) comporte un axe de pivotement (140) et un manchon (150), le manchon (150) étant monté rotatif sur l'axe de pivotement (140) et le premier axe de rotation (120) étant ainsi défini, en particulier l'axe de pivotement (140) étant agencé à distance de la première surface (112).

4. Soupape de dérivation selon la revendication 3, **caractérisée en ce qu'**au moins un bras de levier (152), de préférence deux bras de levier (152), sont agencés sur le manchon (150), le(s) bras de levier (152) étant accouplé(s) de manière rotative dans une région distale à la/aux saillie(s) (114) du clapet (110), lorsque vu(s) depuis l'axe de pivotement (140), et définissant ainsi le deuxième axe de rotation (130).

5. Soupape de dérivation selon l'une quelconque des revendications 3 et 4, **caractérisée en ce qu'**au moins un ressort (160), qui s'oppose à une rotation du clapet (110) autour du premier axe de rotation (120), est agencé autour de l'axe de pivotement (160).

6. Soupape de dérivation selon la revendication 5, **caractérisée en ce que** l'au moins un ressort (160) comprend un ou deux ressorts à branches (160), chaque branche (162) des ressorts à branches étant respectivement guidée dans un réceptacle (116) qui est agencé sur la première surface (112) du clapet (110), en particulier les branches (162) des ressorts à branches (160) étant ainsi guidées dans les réceptacles (116) de manière à pouvoir être déplacées dans les réceptacles (116) pendant l'ouverture du clapet (110).

7. Soupape de dérivation selon l'une quelconque des revendications 2 à 6, **caractérisée en ce qu'**une butée (118) est agencée sur la première surface (112) du clapet (110), la butée (118) limitant un mouvement d'inclinaison initial du clapet (110) pendant l'ouverture, en particulier la butée (118) frappant le(s) bras de levier (152) pendant l'ouverture et ainsi un angle d'inclinaison maximum prédéterminé du clapet (110) étant défini pour le mouvement d'inclinaison initial au début de l'action d'ouverture.

8. Soupape de dérivation selon la revendication 7, **caractérisée en ce qu'**après que la butée (118) a frappé le(s) bras de levier (152), une ouverture supplémentaire du clapet (110) est effectuée par rotation du/des bras de levier (152) autour du premier axe de rotation (120).

9. Soupape de dérivation selon l'une quelconque des revendications précédentes, **caractérisée en ce que** le deuxième axe de rotation (130) change de position dans la section de conduite (200) pendant le mouvement du clapet (110) ; en particulier le premier axe de rotation (120) étant agencé d'une manière telle dans la section de conduite (200) qu'il ne change pas de position dans la section de conduite (200) pendant le mouvement du clapet (110).

10. Soupape de dérivation selon l'une quelconque des revendications précédentes, **caractérisée en ce que** l'axe de pivotement (140) du premier axe de rotation (120) est agencé dans deux réceptacles (142), les deux réceptacles (142) étant fixés dans la paroi de la section de conduite (200) ou étant formés d'un seul tenant avec celle-ci.

11. Soupape de dérivation selon l'une quelconque des revendications précédentes, **caractérisée en ce que** la section de conduite (200) présente un premier diamètre intérieur (D1) et un deuxième diamètre intérieur (D2), le premier diamètre intérieur (D1) étant supérieur au deuxième diamètre intérieur (D2) ; et le dispositif d'étanchéité (100) étant agencé au moins partiellement dans la région du premier diamètre intérieur (D1).

12. Soupape de dérivation selon la revendication 11, **caractérisée en ce qu'**une région de transition de la section de conduite à partir du premier diamètre intérieur (D1) jusqu'au deuxième diamètre intérieur (D2) est configurée de manière conique et définit un siège conique (210) ; en particulier le clapet (110) présentant une forme circulaire, une bague d'étanchéité (170) étant agencée circonférentiellement autour de la circonférence du clapet (110), et la bague d'étanchéité (170) venant en contact sur le siège conique (210) dans l'état fermé.

13. Soupape d'étanchéité selon l'une quelconque des revendications précédentes, **caractérisée en ce que** le clapet (110) s'incline initialement suivant un angle prédéterminé pendant l'ouverture de la soupape de dérivation (10), en particulier à un point de contact (P) entre le clapet (110) ou la bague d'étanchéité (170) et la section de conduite (200), afin d'être apte à tourner ensuite librement autour du premier axe de rotation (120).

14. Unité d'entraînement pour un véhicule à moteur dotée d'une tubulure d'admission pour un moteur comprenant une soupape de dérivation (10) selon l'une quelconque des revendications 1 à 13 et/ou d'une tubulure de gaz d'échappement pour un moteur comprenant une soupape de dérivation (10) selon l'une quelconque des revendications 1 à 13.
